# EUROPEAN PATENT SPECIFICATION

(11) **EP 3 892 176 B1**
(45) Date of publication and mention of the grant of the patent: **29.04.2026**
(21) Application number: 19913479.2
(22) Date of filing: 15.03.2019
(51) Int. Cl.: A47L 9/04

(54) **CLEANING ROBOT, CONTROL METHOD, AND STORAGE MEDIUM**
REINIGUNGSROBOTER, STEUERUNGSVERFAHREN UND SPEICHERMEDIUM
ROBOT DE NETTOYAGE, PROCÉDÉ DE COMMANDE ET SUPPORT D'INFORMATIONS

(30) Priority: 30.01.2019 CN 201910094221
(43) Date of publication of application: 13.10.2021
(73) Proprietor: Midea Robozone Technology Co., Ltd., Suzhou, Jiangsu 215131 (CN)
(72) Inventor: SHEN, Daming, Suzhou, Jiangsu 215100 (CN); CHEN, Yuan, Suzhou, Jiangsu 215100 (CN); WEI, Xianmin, Suzhou, Jiangsu 215100 (CN); XU, Xiaowei, Suzhou, Jiangsu 215100 (CN)
(74) Representative: RGTH
(86) International application number: PCT/CN2019/078306
(87) International publication number: WO 2020/155323

(56) References cited:
- EP-A1- 3 058 860
- WO-A1-2018/217980
- CN-A- 108 814 441
- CN-A- 108 852 170
- CN-A- 109 077 674
- CN-U- 206 534 590
- CN-U- 206 534 590
- CN-U- 206 836 837
- DE-A1- 4 137 886
- IT-B1- 1 265 281
- JP-A- H02 121 615
- US-A1- 2002 124 334

## Description

### TECHNICAL FIELD

The application relates to the field of household appliances, in particular to a cleaning robot, a control method, and a storage medium.

### BACKGROUND

At present, a single roller brush is used for a sweeper, so that only the cleaning effect of a single mode can be met. A fluff roller brush is used by some sweepers, and a flocking roller brush is used by some sweepers. However, the flocking roller brush is obviously better than the fluff roller brush in carpet cleaning, and the fluff roller brush is better than the flocking roller brush in floor cleaning. In the process of cleaning the multi-material ground in the same room, the efficient cleaning of the multi-material ground requires manually replacing the roller brush.

EP 3 058 860 A1 discloses a mobile cleaning robot comprising a cleaning head assembly with two roller brushes that work at the same time, and the mobile cleaning robot is equipped with floor-type-detection techniques that act as triggers for autonomously altering various floor cleaning characteristics such as suction force of the mobile cleaning robot.

US 2002/124334 A1 provides a adjusting device that allows a user to manually adjust the height of two rollers, such that the user can select which of the two roller in the cleaning device is contacting the floor surface.

### SUMMARY

In view of the above, embodiments of the present application provide a cleaning robot, a control method, and a storage medium to solve at least one problem existing in the prior art.

In order to achieve the above object, the technical solutions of the embodiments of the present application are realized as follows.

The embodiments of the application provide a cleaning robot. The cleaning robot comprises a roller brush assembly, a roller brush switching assembly, a detection assembly, and a control assembly; the roller brush assembly comprises at least two roller brushes; wherein,
the detection assembly is configured to detect a medium type of a surface to be cleaned and generate a signal on the basis of a detection result;
the control assembly is configured to control the roller brush switching assembly to switch at least one roller brush of the at least two roller brushes for executing a cleaning operation on the basis of the signal of the detection assembly.

In the aforementioned solution, the roller brush switching assembly comprises: a telescopic device and a bracket having a rotating shaft, wherein at least two roller brushes are fixed on the bracket; the at least two roller brushes can relatively rotate through the rotating shaft;
one end of the telescopic device is connected with the bracket, and the telescopic device is lengthened or shortened to enable the bracket to rotate so that at least one roller brush of the at least two roller brushes executes the cleaning operation.

In the aforementioned solution, the telescopic device comprises a telescopic rod and a drive device;
the drive device is configured to perform a forward rotation or a reverse rotation on the basis of a control instruction of the control assembly;
the telescopic rod is configured to stretch on the basis of the forward rotation of the drive device or contract on the basis of the reverse rotation of the drive device.

In the aforementioned solution, the control assembly is further configured to control the roller brush switching assembly to switch at least two roller brushes to a non-cleaning state when a preset condition is met so that the at least two roller brushes are both away from the surface to be cleaned.

In the aforementioned solution, the detection assembly is configured to transmit a specific sound wave or a specific light wave to the surface to be cleaned and receive a reflected sound wave or a reflected light wave of the surface to be cleaned; the medium type of the surface to be cleaned is determined on the basis of the specific sound wave transmitted and the reflected sound wave received, or the medium type of the surface to be cleaned is determined on the basis of the specific light wave transmitted and the reflected light wave received.

In the aforementioned solution, the cleaning robot further comprises a housing provided with a top cover; the other end of the telescopic device is fixedly connected with the top cover.

In the aforementioned solution, the cleaning robot further comprises a housing provided with a base; the bracket is fixed to the base.

The embodiment of the application provides a control method applied to the cleaning robot. The method comprises:
detecting the medium type of the surface to be cleaned, and obtaining a detection result; and
controlling to switch at least one roller brush of the at least two roller brushes for executing a cleaning operation on the basis of the detection result.

In the aforementioned solution, the detecting the medium type of the surface to be cleaned comprises:
transmitting a specific sound wave or a specific light wave to the surface to be cleaned, and receiving the reflected sound wave or reflected light wave of the surface to be cleaned; and
determining the medium type of the surface to be cleaned on the basis of the specific sound wave transmitted and the reflected sound wave received, or determining the medium type of the surface to be cleaned on the basis of the transmitted specific light wave and the received reflected light wave.

According to the invention, the method further comprises:
when the preset condition is met, controlling to switch the at least two roller brushes to be in a non-cleaning state so as to enable the at least two roller brushes to be away from the surface to be cleaned.

An embodiment of the present application provides a computer readable storage medium having stored thereon a computer program. The computer program, when executed by a processor, implements steps of the control method.

According to the cleaning robot, the control method and the storage medium provided by the embodiments of the application, the medium type of the surface to be cleaned is detected through the detection assembly, and the roller brush switching assembly is controlled to switch at least one roller brush of at least two roller brushes for executing a cleaning operation according to a signal generated by a detection result; therefore, the cleaning robot can automatically switch the roller brushes suitable for different medium types of a surface to be cleaned in the process of cleaning the multi-material ground so that manual replacement is not needed, cleaning is efficiently completed in the whole process, great convenience is provided for the cleaning process of users, and user experience is greatly improved.

### BRIEF DESCRIPTION OF THE DRAWINGS

Fig. 1 is a schematic diagram showing the composition and structure of a cleaning robot provided by an embodiment of the present application;
Fig. 2 is a flow diagram showing an implementation of a control method provided by an embodiment of the present application.

### DETAILED DESCRIPTION

In order to make the objects, technical solutions, and advantages of the embodiments of the present application clearer, the specific technical solutions of the invention will be described in further detail below in conjunction with the drawings in the embodiments of the present application. The following embodiments are illustrative of the present application and are not intended to limit the scope of the present application.

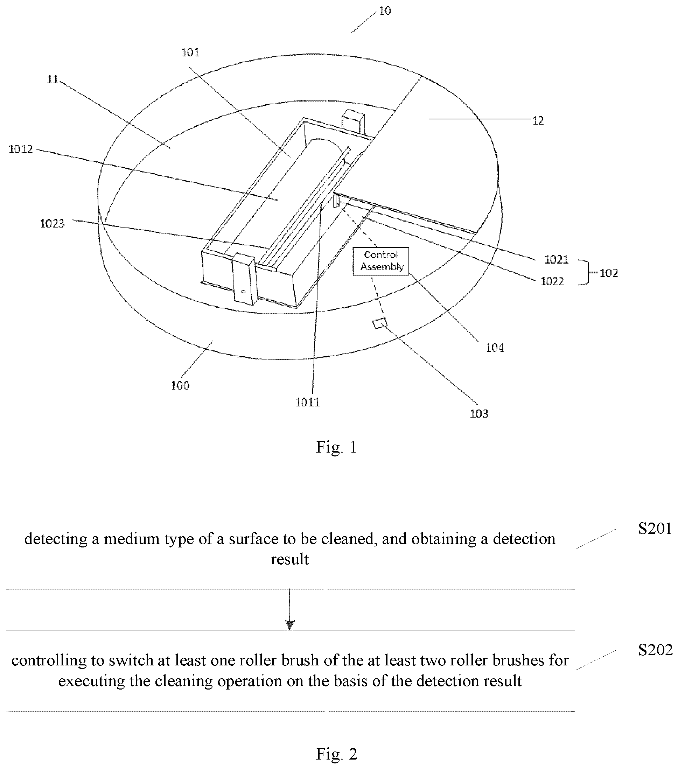

The embodiment of the present application provides a cleaning robot. Fig. 1 is a schematic diagram showing the composition and structure of a cleaning robot provided by an embodiment of the present application. As shown in Fig. 1, the cleaning robot 10 includes a roller brush assembly 101, a roller brush switching assembly 102, a detection assembly 103, and a control assembly 104; the roller brush assembly 101 includes at least two roller brushes;
the detection assembly 103 is configured to detect the medium type of the surface to be cleaned and generate a signal on the basis of the detection result;
The control assembly 104 is configured to control the roller brush switching assembly 102 to switch at least one roller brush of the at least two roller brushes for executing a cleaning operation on the basis of the signal of the detection assembly 103.

It should be noted that in the embodiment of the present application, the detection assembly 103 and the control assembly 104 have a logical association that enables the detection assembly 103 to send a signal generated on the basis of the detection result directly to the control assembly 104. The logical association may be a wired connection, i.e., the detection assembly 103 and the control assembly 104 are connected by a lead capable of transmitting data; the logical association between the detection assembly 103 and the control assembly 104 can also be a wireless connection, and the wireless connection can adopt a near field communication technology, such as Bluetooth, Zigbee and the like; remote communication technologies, such as WiFi (Wireless Fidelity) connection, may also be adopted. The control assembly 104 sends a corresponding control instruction on the basis of the signal of the detection assembly 103.

It should be noted that in the embodiment of the present application, the control assembly 104 and the roller brush switching assembly 102 have a logical association, which may enable the control assembly 104 to control the roller brush switching assembly 102 to switch at least one roller brush of the at least two roller brushes for executing a cleaning operation on the basis of a signal of the detection assembly 103. The logical association may be a wired connection, i.e., the control assembly 104 and the roller brush switching assembly 102 are connected by a lead capable of transmitting data; the logical association between the control assembly 104 and the roller brush switching assembly 102 can also be a wireless connection, and the wireless connection can adopt a near field communication technology, such as Bluetooth, Zigbee and the like; remote communication technologies, such as WiFi connection, may also be adopted. The control assembly 104 sends a control instruction to the roller brush switching assembly 102 on the basis of the signal of the detection assembly 103, and switches at least one roller brush of the at least two roller brushes for executing a cleaning operation through the roller brush switching assembly 102.

The medium type of the surface to be cleaned can be determined according to actual conditions and can be any one of a plurality of medium types of the surface to be cleaned. As an example, the determination can be made according to medium-related data of the surface to be cleaned, and specifically, the determination can be made on the basis of the specific sound wave transmitted and the reflected sound wave received in the medium-related data of the surface to be cleaned, and it can also be determined on the basis of the specific light wave transmitted and the reflected light wave received in the medium-related data of the surface to be cleaned; as an example, the specific sound wave may be an ultrasonic wave and the specific light wave may be a light stream. The medium type may specifically be a floor type, a carpet type, etc.

The detection result indicates the medium type of the surface to be cleaned, and the signal is in a corresponding relationship with the detection result; as an example, when the medium type is a floor type, the signal can uniquely determine that the medium type is the floor type; when the medium type is a carpet type, the signal may uniquely determine that the medium type is a carpet type.

In an alternative embodiment of the present application, when the medium type of the surface to be cleaned is only a carpet type and a floor type, the roller brush assembly 101 may include two roller brushes, which may be a flocking roller brush 1011 suitable for the carpet type and a fluff roller brush 1012 suitable for the floor type.

At least one roller brush is a roller brush determined by the control assembly 104 on the basis of the signal of the detection assembly 103 to be matched with the medium type of the surface to be cleaned. For example, when the control assembly determines that the medium type of the surface to be cleaned is a carpet type on the basis of the signal, at least one roller brush can be a flocking roller brush; when the control assembly determines that the medium type of the surface to be cleaned is a floor type on the basis of the signal, the at least one roller brush may be a fluff roller brush.

The signal of the detection assembly 103 controls the roller brush switching assembly 102 to switch at least one roller brush of the at least two roller brushes for executing a cleaning operation. It may be that at least one roller brush in the roller brush assembly 101 is just in contact with the medium of the surface to be cleaned in order to execute a cleaning operation. For better understanding, examples are illustrated herein.

Example 1: when the control assembly 104 determines that the medium type of the surface to be cleaned is a carpet type on the basis of the signal of the detection assembly 103, the control assembly 104 enables the flocking roller brush in the roller brush assembly 101 to contact the carpet by controlling the roller brush switching assembly 102 to switch so that at least one flocking roller brush of the at least two roller brushes executes the cleaning operation.

Example 2: when the control assembly 104 determines that the medium type of the surface to be cleaned is the floor type on the basis of the signal of the detection assembly 103, the control assembly 104, by controlling the roller brush switching assembly 102 to switch, enables the fluff roller brush in the roller brush assembly 101 to contact the floor to facilitate the cleaning of the floor by the fluff roller brush so that at least one fluff roller brush of the at least two roller brushes executes the cleaning operation.

In an alternative embodiment of the present application, the roller brush switching assembly 102 includes: a telescopic device 1021 and a bracket 1022 having a rotating shaft 1023. At least two roller brushes are fixed on the bracket 1022; the at least two roller brushes can relatively rotate through the rotating shaft 1023;
one end of the telescopic device 1021 is connected with the bracket, and the telescopic device 1021 is lengthened or shortened to enable the bracket 1022 to rotate so that at least one roller brush of the at least two roller brushes executes the cleaning operation.

In an alternative embodiment of the present application, the rotating shaft 1023 can pass through the bracket 1022, at least two roller brushes are fixed in the bracket 1022, the roller brushes can be respectively fixed on two sides of the rotating shaft 1023, one end of the telescopic device 1021 can be connected with the bracket 1022 by pressing on the bracket 1022, and when the telescopic device 1021 is in the original length, the bracket 1022 can be in a balanced state, and at least two roller brushes on the bracket are at a certain distance from the ground; when the telescopic device 1021 is lengthened or shortened, the bracket 1022 is rotated clockwise or counterclockwise through the rotating shaft 1023, and at least two roller brushes in the bracket 1022 relatively rotate around the rotating shaft 1023, thereby changing the positions of the at least two roller brushes so that on the basis of the positions at least one roller brush of the at least two roller brushes executes the cleaning operation.

As an example, the telescopic device 1021 can specifically be an electric telescopic rod, only two roller brushes are fixed in the bracket 1022, and the two roller brushes are respectively on two sides of the rotating shaft 1023 and are a flocking roller brush 1011 and a fluff roller brush 1012. When the electric telescopic rod stretches, the bracket 1022 rotates clockwise to make the flocking roller brush 1011 contact with the medium of the surface to be cleaned; when the electric telescoping rod is shortened, the bracket 1022 is rotated counterclockwise to make the fluff roller brush 1012 contact with the medium of the surface to be cleaned.

As an example, the telescopic device 1021 includes a telescopic rod and a drive device;
the drive device is configured to perform a forward rotation or a reverse rotation on the basis of a control instruction of the control assembly 104;
the telescopic rod is configured to stretch on the basis of the forward rotation of the drive device or contract on the basis of the reverse rotation of the drive device.

It should be noted that in embodiments of the present application, the control assembly 104 and the drive device have a logical association that enables the control assembly 104 to send a control instruction directly to the drive device. The logical association may be a wired connection, i.e., the control assembly 104 and the drive device are connected by a lead capable of transmitting data; the logical association between the control assembly 104 and the drive device can also be a wireless connection, and the wireless connection can adopt a near field communication technology, such as Bluetooth, Zigbee and the like; remote communication technologies, such as WiFi connection, may also be adopted. The control assembly 104 controls the drive device to carry out forward rotation or reverse rotation by directly sending a control instruction to the drive device, and makes the telescopic rod stretch or contract by the forward rotation or reverse rotation of the drive device.

In an alternative embodiment of the present application, the drive device may specifically be, but is not limited to, a motor that rotates in either a forward direction or a reverse direction on the basis of control instruction of the control assembly 104 to facilitate the stretching or contracting of the telescopic rod.

As a preferred embodiment, when the drive device is a motor, and when the motor rotates forward on the basis of the control instruction of the control assembly 104, the telescopic rod is stretched; when the motor rotates in the reverse direction on the basis of the control instruction of the control assembly 104, the telescopic rod is contracted.

It should be noted that the control assembly 104 is further configured to control the roller brush switching assembly 102 to switch at least two roller brushes to a non-cleaning state when a preset condition is met so that the at least two roller brushes are both away from the surface to be cleaned.

Here, the preset condition can be determined according to actual conditions. As an example, the preset condition can be that a specific operation instruction is received; as an example, if the control assembly 104 receives a charging instruction, it indicates that currently the cleaning robot has insufficient remaining power and needs to be charged, or currently the cleaning robot is in a charging state, indicating that the cleaning robot is currently in a non-working mode. The roller brush switching assembly 102 is controlled to switch at least two roller brushes to a non-cleaning state, that is, at least two roller brushes are at a distance from the ground to reduce the friction between the roller brushes and the ground. Of course, embodiments of the present application are not limited to the preset condition.

Switching the at least two roller brushes to the non-cleaning state by the roller brush switching assembly 102 may be such that at least two roller brushes in the roller brush assembly 101 are lifted away from the medium of the surface to be cleaned to evade the contact with the medium of the surface to be cleaned.

It should be noted that the detection assembly 103 is configured to transmitt a specific sound wave or a specific light wave to the surface to be cleaned and receive a reflected sound wave or a reflected light wave of the surface to be cleaned; the medium type of the surface to be cleaned is determined on the basis of the specific sound wave transmitted and the reflected sound wave received, or the medium type of the surface to be cleaned is determined on the basis of the specific light wave transmitted and the reflected light wave received.

Here, the specific sound wave or the specific light wave may be determined according to the actual conditions. As an example, the specific sound wave may be an ultrasonic wave and the specific light wave may be a light stream.

The medium type of the surface to be cleaned in the embodiment is a type that matches the medium type of the surface currently being cleaned, and may be, for example, a floor type or a carpet type.

In an alternative embodiment of the present application, the detection assembly 103 may be provided with a sensor through which ultrasonic wave or light stream is transmitted onto the medium of the surface to be cleaned. Due to the different medium types of the surface to be cleaned, the reflected sound wave or reflected light wave is also different. The detection assembly 103 receives the reflected sound wave or reflected light wave of the medium of the surface to be cleaned, and determines the medium type of the surface to be cleaned according to the specific sound wave transmitted and the reflected sound wave received, or determines the medium type of the surface to be cleaned according to the specific light wave transmitted and the reflected light wave received.

It should be noted that the cleaning robot 10 further comprises a housing 100 provided with a top cover 12; the other end of the telescopic device 1021 is fixedly connected with the top cover 12.

Here, the other end of the telescopic device 1021 may be fixed to the top cover 12 in any manner, which will not be limited herein.

It should be noted that the cleaning robot 10 further comprises a housing 100 provided with a base 11; the bracket 1022 is fixed to the base 11.

Here, the bracket 1022 may be fixed to the base 11 in any manner, and as an example, the bracket 1022 may be fixed to two protrusions of the base 11.

On the basis of the cleaning robot shown in Fig. 1, the embodiment of the application also provides a control method which is applied to the cleaning robot; Fig. 2 is a flow diagram showing an implementation of a control method provided by the embodiment of the present application. As shown in Fig. 2, the method includes steps as follows.

Step S201, detecting the medium type of the surface to be cleaned, and obtaining a detection result.

It should be noted that the medium type of the surface to be cleaned can be determined according to actual conditions and can be any one of a plurality of medium types of the surface to be cleaned. As an example, the determination can be made according to medium-related data of the surface to be cleaned, and specifically, the determination can be made on the basis of the specific sound wave transmitted and the reflected sound wave received in the medium-related data of the surface to be cleaned, and it can also be determined on the basis of the transmitted specific light wave and the received reflected light wave in the medium-related data of the surface to be cleaned; as an example, the specific sound wave may be an ultrasonic wave and the specific light wave may be a light stream. The medium type may specifically be a floor type, a carpet type, etc.

The detection result indicates the medium type of the surface to be cleaned.

Step S202, controlling to switch at least one roller brush of the at least two roller brushes for executing a cleaning operation on the basis of the detection result.

It should be noted that at least one roller brush is a roller brush determined on the basis of the detection result to be matched with the medium type of the surface to be cleaned. For example, when the detection result indicates that the medium type of the surface to be cleaned is a carpet type, at least one roller brush may be a flocking roller brush suitable for a carpet type; when the detection result indicates that the medium type of the surface to be cleaned is a floor type, the at least one roller brush may be a fluff roller brush suitable for the floor type.

Controlling to switch at least one roller brush of the at least two roller brushes for executing a cleaning operation on the basis of the detection result may be controlling, on the basis of the detection result, to switch at least one roller brush of the at least two roller brushes to be just in contact with the medium of the surface to be cleaned to facilitate the execution of the cleaning operation. For better understanding, examples are illustrated herein.

Example 1: when the detection result indicates that the medium type of the surface to be cleaned is a carpet type, the switching is controlled to enable the flocking roller brush in the at least two roller brushes to be in contact with the carpet, so that the at least one flocking roller brush in the at least two roller brushes can conveniently execute the cleaning operation.

Example 2: when the detection result indicates that the medium type of the surface to be cleaned is a floor type, the switching is controlled to enable the fluff roller brush in the at least two roller brushes to be in contact with the floor so that the at least one fluff roller brush in the at least two roller brushes can conveniently execute the cleaning operation.

In an alternative embodiment of the present application, the detection of the medium type of the surface to be cleaned includes:
transmitting a specific sound wave or a specific light wave to the surface to be cleaned, and receiving a reflected sound wave or a reflected light wave of the surface to be cleaned; and
determining the medium type of the surface to be cleaned on the basis of the specific sound wave transmitted and the reflected sound wave received, or determining the medium type of the surface to be cleaned on the basis of the specific light wave transmitted and the reflected light wave received.

Here, the specific sound wave or the specific light wave may be determined according to the actual conditions. As an example, the specific sound wave may be an ultrasonic wave and the specific light wave may be a light stream.

The medium type of the surface to be cleaned in the embodiment is a type that matches the medium type of the surface currently being cleaned, and may be, for example, a floor type or a carpet type.

Here, the ultrasonic wave or light stream are transmitted to the medium of the surface to be cleaned. Since the medium types of the surface to be cleaned are different, the reflected sound wave or reflected light wave is different. Therefore, the medium type of the surface to be cleaned can be determined on the basis of the specific sound wave transmitted and the reflected sound wave received, or the medium type of the surface to be cleaned can be determined on the basis of the specific light wave transmitted and the reflected light wave received.

In other embodiments, the method further includes:
when the preset condition is met, controlling to switch the at least two roller brushes to be in a non-cleaning state so as to enable the at least two roller brushes to be away from the surface to be cleaned.

Here, the preset condition can be determined according to actual conditions. As an example, the preset condition can be that a specific operation instruction is received; as an example, the preset condition can be that a charging instruction is received, indicating that currently the cleaning robot has insufficient remaining power and needs to be charged, or currently the cleaning robot is in a charging state, indicating that the cleaning robot is currently in a non-working mode. At least two roller brushes are controlled to be in a non-cleaning state, that is, at least two roller brushes are at a distance from the ground to reduce the friction between the roller brushes and the ground. Of course, embodiments of the present application are not limited to the preset condition.

When the preset condition is met, controlling to switch the at least two roller brushes to the non-cleaning state may be such that at least two roller brushes are controlled to be lifted away from the medium of the surface to be cleaned to evade the contact with the medium of the surface to be cleaned.

It will be appreciated that the processor may be an integrated circuit chip having a signal processing capacity. During implementation, the steps of the method described above may be completed by an integrated logic circuit in hardware or instruction in the form of software in a processor. The processor may be a general purpose processor, a digital signal processor (DSP), or other programmable logic devices, discrete gate or transistor logic device, discrete hardware assembly, etc. A processor may implement or execute the methods, steps, and logic block diagrams disclosed in the embodiments herein. A general purpose processor may be a microprocessor, or any conventional processor, etc. The steps of the method disclosed in the embodiments of the application can be directly embodied in the execution and completion of a hardware decoding processor or can be executed by using a combination of hardware and software modules in a decoding processor. A software module may reside in a storage medium, the storage medium residing in the memory. The processor reads information from the memory, and, in conjunction with its hardware, completes the steps of the aforementioned method.

Embodiments of the present application also provide a computer readable storage medium having stored thereon a computer program that, when executed by a processor, implements the steps in the control method described in embodiments of the present application. The computer readable storage medium may be ferromagnetic random access memory (FRAM), read only memory (ROM), programmable read-only memory (PROM), Erasable Programmable Read-Only Memory (EPROM), Flash Memory, magnetic surface storage, optical disk, or Compact Disc Read-Only Memory (CD-ROM), and like memories; or may be various equipment including one or any combination of the above memories.

In the several embodiments provided herein, it is to be understood that the disclosed equipment and method may be implemented in other ways. The embodiments of the equipment described above are merely illustrative, e.g. the division of the units is merely a logical functional division, and further divisions are possible in practical implementations, e.g. multiple units or assemblies may be combined, or may be integrated into another system, or some features may be omitted, or not executed. In addition, the coupling, or direct coupling, or communication connection between the assemblies shown or discussed may be indirect coupling or communication connection through some interfaces, equipment, or units, and may be in electrical, mechanical, or other forms.

The units described above as separate elements may or may not be physically separate, and the elements shown as units may or may not be physical units, i.e. may be located in one place or distributed over a plurality of network units; some or all of the units may be selected to achieve the objects of the embodiment solutions according to practical requirements.

In addition, each functional unit in each embodiment of the application can all be integrated into one processing unit, each unit can be separately used as one unit, and two or more units can be integrated into one unit; the integrated unit described above can be implemented either in the form of hardware or in hardware plus software functional unit.

Those of ordinary skills in the art will appreciate that: all or part of the steps for implementing the method embodiment described above may be completed by hardware associated with program instruction. The program may be stored in a computer readable storage medium, and when the program is executed, the steps including the method embodiment described above are executed; the aforementioned storage medium includes: mobile storage equipment, ROM, RAM, diskette or optical disk, etc. and various media on which the program code may be stored.

Alternatively, the aforementioned integrated unit of the present application, if implemented in the form of a software functional module and sold or used as an independent product, may also be stored in a computer readable storage medium. On the basis of such an understanding, the technical solutions of the embodiments of the present application, in essence, or portions thereof that contribute to the prior art, may be embodied in the form of a software product stored in one storage medium, including several instructions for enabling computer equipment (which may be a personal computer, a server, or network equipment, etc.) to execute all or part of the method described in each embodiment of the present application. The aforementioned storage medium includes: mobile storage equipment, ROM, RAM, diskette or optical disk, etc., and various media on which program code may be stored.

The above description is only specific preferred embodiments of the present application, and the scope of the present application is not limited thereto. It is within the scope of the application that any person skilled in the art may readily conceive of alterations or substitutions within the technical scope of the application. Therefore, the scope of the application should be determined by the scope of the claims.

## Claims

1. A cleaning robot (10), comprising a roller brush assembly (101), a roller brush switching assembly (102), a detection assembly (103), and a control assembly (104); the roller brush assembly (101) comprising at least two roller brushes (1011, 1012); wherein
the detection assembly (103) is configured to detect a medium type of a surface to be cleaned and to generate a signal based on a detection result;
wherein the control assembly (104) is configured to control the roller brush switching assembly (102) to switch at least one roller brush of the at least two roller brushes (1011, 1012) for executing a cleaning operation based on the signal of the detection assembly (103),
**characterized in that** the control assembly (104) is further configured to, when a preset condition is met, control the roller brush switching assembly (102) to switch the at least two roller brushes (1011, 1012) to a non-cleaning state, so that the at least two roller brushes (1011, 1012) are both away from the surface to be cleaned.

2. The cleaning robot (10) according to claim 1, **characterized in that** the roller brush switching assembly (102) comprises: a telescopic device (1021) and a bracket (1022) having a rotating shaft (1023), wherein the at least two roller brushes (1011, 1012) are fixed on the bracket (1022); the at least two roller brushes (1011, 1012) can relatively rotate through the rotating shaft (1023);
wherein an end of the telescopic device (1021) is connected with the bracket (1022), the telescopic device (1021) is lengthened or shortened to enable the bracket (1022) to rotate, so that at least one roller brush of the at least two roller brushes (1011, 1012) executes the cleaning operation.

3. The cleaning robot (10) according to claim 2, **characterized in that** the telescopic device (1021) comprises a telescopic rod and a drive device;
the drive device is configured to perform a forward rotation or a reverse rotation based on a control instruction of the control assembly (104);
the telescopic rod is configured to stretch based on the forward rotation of the drive device or contract based on the reverse rotation of the drive device.

4. The cleaning robot (10) according to any one of claims 1 to 3, **characterized in that** the detection assembly (103) is configured to transmit a specific sound wave or a specific light wave to the surface to be cleaned, and receive a reflected sound wave or a reflected light wave of the surface to be cleaned; the medium type of the surface to be cleaned is determined based on the specific sound wave transmitted and the reflected sound wave received, or the medium type of the surface to be cleaned is determined based on the specific light wave transmitted and the reflected light wave received.

5. The cleaning robot (10) according to any one of claims 2 to 4, **characterized by** further comprising a housing (100), the housing (100) provided with a top cover (12); wherein an other end of the telescopic device (1021) is fixedly connected with the top cover (12).

6. The cleaning robot (10) according to any one of the claims 2 to 5, **characterized by** further comprising a housing (100), the housing (100) provided with a base (11); wherein the bracket (1022) is fixed to the base (11).

7. A control method, **characterized in that** the method is applied to a cleaning robot (10) according to any one of claims 1 to 6, the method comprising:
(S201) detecting a medium type of a surface to be cleaned, and obtaining a detection result; and
(S202) controlling at least one roller brush of the at least two roller brushes (1011, 1012) to swith to execut a cleaning operation based on the detection result.

8. The method according to claim 7, **characterized in that** the detecting a medium type of a surface to be cleaned comprises:
transmitting a specific sound wave or a specific light wave to the surface to be cleaned, and receiving a reflected sound wave or a reflected light wave of the surface to be cleaned; and
determining the medium type of the surface to be cleaned based on the specific sound wave transmitted and the reflected sound wave received, or determining the medium type of the surface to be cleaned based on the specific light wave transmitted and the reflected light wave received.

9. The method according to claim 7 or 8, **characterized in that** the method further comprises:
when a preset condition is met, controlling to switch the at least two roller brushes (1011, 1012) to be in a non-cleaning state, so as to enable the at least two roller brushes (1011, 1012) to both be away from the surface to be cleaned.

10. A computer readable storage medium having stored thereon a computer program, **characterized in that** the computer program, when executed by a processor, implements steps of a control method of any one of claims 7 to 9.

## Patentansprüche

1. Reinigungsroboter (10), umfassend eine Walzenbürstenanordnung (101), eine Walzenbürsten-Umschaltanordnung (102), eine Erfassungsanordnung (103) und eine Steueranordnung (104); wobei die Walzenbürstenanordnung (101) mindestens zwei Walzenbürsten (1011, 1012) umfasst; wobei
die Erfassungsanordnung (103) so konfiguriert ist, dass sie einen Medientyp einer zu reinigenden Oberfläche erfasst und auf der Grundlage eines Erfassungsergebnisses ein Signal erzeugt;
wobei die Steueranordnung (104) so konfiguriert ist, dass sie die Walzenbürsten-Umschaltanordnung (102) so steuert, dass sie mindestens eine Walzenbürste der mindestens zwei Walzenbürsten (1011, 1012) zum Ausführen eines Reinigungsvorgangs auf der Grundlage des Signals der Erfassungsanordnung (103) umschaltet,
**dadurch gekennzeichnet, dass** die Steueranordnung (104) ferner so konfiguriert ist, dass sie, wenn eine voreingestellte Bedingung erfüllt ist, die Walzenbürsten-Umschaltanordnung (102) so steuert, dass sie die mindestens zwei Walzenbürsten (1011, 1012) in einen Nicht-Reinigungszustand umschaltet, so dass die mindestens zwei Walzenbürsten (1011, 1012) beide von der zu reinigenden Oberfläche entfernt sind .

2. Reinigungsroboter (10) gemäß Anspruch 1, **dadurch gekennzeichnet, dass** die Walzenbürsten-Umschaltanordnung (102) Folgendes umfasst: eine Teleskopvorrichtung (1021) und eine Halterung (1022) aufweisend eine Drehwelle (1023), wobei die mindestens zwei Walzenbürsten (1011, 1012) an der Halterung (1022) befestigt sind; die mindestens zwei Walzenbürsten (1011, 1012) sich durch die Drehwelle (1023) relativ zueinander drehen können;
wobei ein Ende der Teleskopvorrichtung (1021) mit der Halterung (1022) verbunden ist, die Teleskopvorrichtung (1021) verlängert oder verkürzt wird, um der Halterung (1022) zu ermöglichen, sich zu drehen, so dass mindestens eine Walzenbürste der mindestens zwei Walzenbürsten (1011, 1012) den Reinigungsvorgang ausführt.

3. Reinigungsroboter (10) gemäß Anspruch 2, **dadurch gekennzeichnet, dass** die Teleskopvorrichtung (1021) eine Teleskopstange und eine Antriebsvorrichtung umfasst;
die Antriebsvorrichtung so konfiguriert ist, dass sie auf der Grundlage einer Steueranweisung der Steueranordnung (104) eine Vorwärtsdrehung oder eine Rückwärtsdrehung ausführt;
die Teleskopstange so konfiguriert ist, dass sie sich auf der Grundlage der Vorwärtsdrehung der Antriebsvorrichtung ausdehnt oder auf der Grundlage der Rückwärtsdrehung der Antriebsvorrichtung zusammenzieht.

4. Reinigungsroboter (10) gemäß einem der Ansprüche 1 bis 3, **dadurch gekennzeichnet, dass** die Erfassungsanordnung (103) so konfiguriert ist, dass sie eine spezifische Schallwelle oder eine spezifische Lichtwelle an die zu reinigende Oberfläche sendet und eine reflektierte Schallwelle oder eine reflektierte Lichtwelle der zu reinigenden Oberfläche empfängt; der Medientyp der zu reinigenden Oberfläche auf der Grundlage der gesendeten spezifischen Schallwelle und der empfangenen reflektierten Schallwelle bestimmt wird oder der Medientyp der zu reinigenden Oberfläche auf der Grundlage der gesendeten spezifischen Lichtwelle und der empfangenen reflektierten Lichtwelle bestimmt wird.

5. Reinigungsroboter (10) gemäß einem der Ansprüche 2 bis 4, **dadurch gekennzeichnet, dass** er ferner ein Gehäuse (100) umfasst, wobei das Gehäuse (100) mit einer oberen Abdeckung (12) versehen ist; wobei ein anderes Ende der Teleskopvorrichtung (1021) fest mit der oberen Abdeckung (12) verbunden ist.

6. Reinigungsroboter (10) gemäß einem der Ansprüche 2 bis 5, **dadurch gekennzeichnet, dass** er ferner ein Gehäuse (100) umfasst, wobei das Gehäuse (100) mit einer Basis (11) versehen ist; wobei die Halterung (1022) an der Basis (11) befestigt ist.

7. Steuerungsverfahren, **dadurch gekennzeichnet, dass** das Verfahren auf einen Reinigungsroboter (10) gemäß einem der Ansprüche 1 bis 6 angewendet wird, wobei das Verfahren Folgendes umfasst:
(S201) Erfassen eines Medientyps einer zu reinigenden Oberfläche und Erhalten eines Erfassungsergebnisses; und
(S202) Steuern mindestens einer Walzenbürste der mindestens zwei Walzenbürsten (1011, 1012), um umzuschalten, um auf der Grundlage des Erfassungsergebnisses einen Reinigungsvorgang auszuführen.

8. Verfahren gemäß Anspruch 7, **dadurch gekennzeichnet, dass** das Erfassen eines Medientyps einer zu reinigenden Oberfläche Folgendes umfasst:
Senden einer spezifischen Schallwelle oder einer spezifischen Lichtwelle an die zu reinigende Oberfläche und Empfangen einer reflektierten Schallwelle oder einer reflektierten Lichtwelle der zu reinigenden Oberfläche; und
Bestimmen des Medientyps der zu reinigenden Oberfläche auf der Grundlage der gesendeten spezifischen Schallwelle und der empfangenen reflektierten Schallwelle oder Bestimmen des Medientyps der zu reinigenden Oberfläche auf der Grundlage der gesendeten spezifischen Lichtwelle und der empfangenen reflektierten Lichtwelle.

9. Verfahren gemäß Anspruch 7 oder 8, **dadurch gekennzeichnet, dass** das Verfahren ferner Folgendes umfasst:
wenn eine voreingestellte Bedingung erfüllt ist, Steuern, so dass es die mindestens zwei Walzenbürsten (1011, 1012) in einen Nicht-Reinigungszustand umschaltet, so dass es den mindestens zwei Walzenbürsten (1011, 1012) ermöglicht wird, dass beide von der zu reinigenden Oberfläche entfernt sind.

10. Computerlesbares Speichermedium, aufweisend ein darauf gespeichertes Computerprogramm, **dadurch gekennzeichnet, dass** das Computerprogramm, wenn es von einem Prozessor ausgeführt wird, Schritte eines Steuerungsverfahrens gemäß einem der Ansprüche 7 bis 9 implementiert.

## Revendications

1. Un robot de nettoyage (10), comprenant un ensemble de brosses à rouleaux (101), un ensemble de commutation de brosses à rouleaux (102), un ensemble de détection (103) et un ensemble de commande (104); l'ensemble de brosses à rouleaux (101) comprenant au moins deux brosses à rouleaux (1011, 1012) ; dans lequel
l'ensemble de détection (103) est configuré pour détecter un type de milieu d'un surface à nettoyer et pour générer un signal basé sur un résultat de détection ;
dans lequel l'ensemble de commande (104) est configuré pour commander l'ensemble de commutation de brosses à rouleaux (102) afin de commuter au moins une brosse à rouleau parmi les au moins deux brosses à rouleaux (1011, 1012) pour exécuter une opération de nettoyage sur la base du signal de l'ensemble de détection (103),
**caractérisé en ce que** l'ensemble de commande (104) est en outre configuré pour, lorsqu'une condition prédéfinie est remplie, commander l'ensemble de commutation de brosses à rouleaux (102) afin de commuter les au moins deux brosses à rouleaux (1011, 1012) vers un état de non-nettoyage, de sorte que les au moins deux brosses à rouleaux (1011, 1012) soient toutes deux éloignées de la surface à nettoyer .

2. Le robot de nettoyage (10) selon la revendication 1, **caractérisé en ce que** l'ensemble de commutation de brosses à rouleaux (102) comprend : un dispositif télescopique (1021) et un support (1022) comportant un arbre rotatif (1023), dans lequel les au moins deux brosses à rouleaux (1011, 1012) sont fixées sur le support (1022) ; les au moins deux brosses à rouleau (1011, 1012) peuvent tourner relativement grâce à l'arbre rotatif (1023) ;
dans lequel une extrémité du dispositif télescopique (1021) est reliée au support (1022), le dispositif télescopique (1021) est allongé ou raccourci pour permettre au support (1022) de tourner, de sorte qu'au moins une brosse à rouleau parmi les au moins deux brosses à rouleau (1011, 1012) effectue l'opération de nettoyage.

3. Le robot de nettoyage (10) selon la revendication 2, **caractérisé en ce que** le dispositif télescopique (1021) comprend une tige télescopique et un dispositif d'entraînement ;
le dispositif d'entraînement est configuré pour effectuer une rotation vers l'avant ou une rotation vers l'arrière sur la base d'une instruction de commande de l'ensemble de commande (104) ;
la tige télescopique est configurée pour s'étirer sur la base de la rotation vers l'avant du dispositif d'entraînement ou se contracter sur la base de la rotation vers l'arrière du dispositif d'entraînement.

4. Le robot de nettoyage (10) selon l'une quelconque des revendications 1 à 3, **caractérisé en ce que** l'ensemble de détection (103) est configuré pour transmettre une onde sonore spécifique ou une onde lumineuse spécifique à la surface à nettoyer, et recevoir une onde sonore réfléchie ou une onde lumineuse réfléchie de la surface à nettoyer ; le type de milieu de la surface à nettoyer est déterminé en fonction de l'onde sonore spécifique transmise et de l'onde sonore réfléchie reçue, ou le type de milieu de la surface à nettoyer est déterminé en fonction de l'onde lumineuse spécifique transmise et de l'onde lumineuse réfléchie reçue.

5. Le robot de nettoyage (10) selon l'une quelconque des revendications 2 à 4, **caractérisé en ce qu'**il comprend en outre un boîtier (100), le boîtier (100) étant muni d'un couvercle supérieur (12) ; dans lequel une autre extrémité du dispositif télescopique (1021) est reliée de manière fixe au couvercle supérieur (12).

6. Le robot de nettoyage (10) selon l'une quelconque des revendications 2 à 5, **caractérisé en ce qu'**il comprend en outre un boîtier (100), le boîtier (100) étant muni d'une base (11) ; dans lequel le support (1022) est fixé à la base (11).

7. Procédé de commande, **caractérisé en ce que** le procédé est appliqué à un robot de nettoyage (10) selon l'une quelconque des revendications 1 à 6, le procédé comprenant :
(S201) la détection d'un type de milieu d'une surface à nettoyer, et l'obtention d'un résultat de détection ; et
(S202) commander au moins une brosse à rouleau parmi les au moins deux brosses à rouleau (1011, 1012) pour passer à l'exécution d'une opération de nettoyage sur la base du résultat de détection.

8. Procédé selon la revendication 7, **caractérisé en ce que** la détection d'un type de milieu d'une surface à nettoyer comprend :
la transmission d'une onde sonore spécifique ou d'une onde lumineuse spécifique vers la surface à nettoyer, et la réception d'une onde sonore réfléchie ou d'une onde lumineuse réfléchie de la surface à nettoyer ; et
la détermination du type de milieu de la surface à nettoyer sur la base de l'onde sonore spécifique transmise et de l'onde sonore réfléchie reçue, ou la détermination du type de milieu de la surface à nettoyer sur la base de l'onde lumineuse spécifique transmise et de l'onde lumineuse réfléchie reçue.

9. Procédé selon la revendication 7 ou 8, **caractérisé en ce que** le procédé comprend en outre :
lorsqu'une condition prédéfinie est remplie, commander la commutation des au moins deux brosses à rouleaux (1011, 1012) pour qu'elles soient dans un état de non-nettoyage, de manière à permettre aux au moins deux brosses à rouleaux (1011, 1012) d'être toutes deux éloignées de la surface à nettoyer.

10. Support de stockage lisible par ordinateur sur lequel est stocké un programme informatique, **caractérisé en ce que** le programme informatique, lorsqu'il est exécuté par un processeur, met en œuvre des étapes d'un procédé de commande selon l'une quelconque des revendications 7 à 9.
